# EUROPÄISCHE PATENTSCHRIFT

(11) **EP 3 686 697 B1**
(45) Veröffentlichungstag und Bekanntmachung des Hinweises auf die Patenterteilung: **01.01.2025**
(21) Anmeldenummer: 19153564.0
(22) Anmeldetag: 24.01.2019
(51) Int. Cl.: G05B 19/418

(54) **REGLEROPTIMIERUNG FÜR EIN LEITSYSTEM EINER TECHNISCHEN ANLAGE**
CONTROLLER OPTIMISATION FOR A CONTROL SYSTEM OF A TECHNICAL ASSEMBLY
OPTIMISATION DU RÉGULATEUR POUR UN SYSTÈME DE COMMANDE D'UNE INSTALLATION TECHNIQUE

(43) Veröffentlichungstag der Anmeldung: 29.07.2020
(73) Patentinhaber: Siemens Aktiengesellschaft, 80333 München (DE)
(72) Erfinder: Lutz, Benjamin, 76327 Pfinztal (DE); Wolf, Gerrit, 76187 Karlsruhe (DE)
(74) Vertreter: Siemens Patent Attorneys

(56) Entgegenhaltungen:
- EP-A1- 3 361 341
- EP-A2- 0 508 386
- EP-A2- 2 042 958
- US-A1- 2005 033 464

## Beschreibung

Die Erfindung betrifft ein System, umfassend einen Operator Station Client und einen mit einem Operator Station Client verbundenen Operator Station Server eines Leitsystems eines technischen Systems. Zudem betrifft die Erfindung ein Leitsystem für ein technisches System gemäß Anspruch 6 und eine Verwendung eines Leitsystems zum Betrieb eines technischen Systems gemäß Anspruch 7.

Regelkreise sind die kleinste technologische Einheit der Automatisierung in verfahrenstechnischen Produktionsanlagen. Sie bilden die Basis für jegliche Prozesssteuerung, da sie das Erfüllen der vorgegebenen Sollwerte hinsichtlich Level, Durchfluss, Temperatur, Druck etc. zusichern und somit den Betrieb einer Anlage aus verfahrenstechnischer Sicht ermöglichen. Deshalb ist es ein wichtiges Bestreben der Anlagenbetreiber, ihre Regelkreise so eingestellt zu haben, dass es weder zu starken Prozessschwankungen (Qualitätsverluste), zu Energie- und Materialverlusten durch schlechtes zeitliches Reaktionsverhalten oder zu Überbeanspruchung der Aktuatorik (Pumpen, Ventile etc.) auf Grund von Schwingungen oder hoher Variabilität am Stellaktor (Reglerausgang) kommt.

Um einen Regelkreis gut betreiben zu können, muss jedoch die Hardware (Aktor, Regelstrecke und Sensor) richtig dimensioniert und die Parametrierung des Reglers im Automatisierungsprogramm darauf abgestimmt (Tuning) sein. In der Praxis ist ein solches Tuning jedoch sehr zeit- und ressourcenaufwändig. In der Regel werden Anlagen zunächst bei der Inbetriebnahme mit Standardparametersätzen in Betrieb genommen. Diese sind meist basierend auf Erfahrung für jeweilige Strecken (je Druck, Durchfluss, Level etc.) gewählt und werden in der Software eingestellt.

Auswertungen zeigen, dass selbst nach jahrelangem Betrieb einer verfahrenstechnischen Anlage noch immer viele Regelkreise in einer solchen initialen Standardkonfiguration laufen. Das Tuning wird gegenwärtig nur dann durchgeführt, wenn man entweder Probleme im Betrieb hat oder Potentiale zur Verbesserung vermutet.

Für diese Anwendung gibt es unterschiedlichste Werkzeuge zur Durchführung von Regleroptimierungen. Ein Beispiel hierfür ist das Softwarewerkzeug "PID Tuner" der Firma Siemens, welches, wie in der klassischen Regleroptimierung, in Versuchen an der verfahrenstechnischen Anlage eingesetzt wird. Hierzu wird im Engineering-System, wo alle notwendigen Parameter der Reglerbausteine vorhanden sind, ein Sprung an der offenen Strecke (Aktor, Prozess, Sensor) initiiert und die Antwort aufgezeichnet. Die eigentliche Produktion ist in dem Fall im Stopp, da die Experimente ohne Störungen durchgeführt werden (z.B. Wartungsfenster). Das Software-Werkzeug bestimmt dann neue Parameter, die übernommen werden können und vom Nutzer in den Betrieb gebracht werden müssen. Das Software-Werkzeug kann jedoch nicht auf alle Arten von PID-Bausteintypen angewandt werden, was eine geringe Integration im eigentlichen Leitsystem zur Folge hat. Deshalb sind Regleroptimierungen heute ein langwieriger Prozess, der eher projektartig durchgeführt wird.

Für viele Prozesse, wie z.B. thermisches Schmelzen aber auch bei vielen chemischen Reaktionen, kann ein solches Experiment jedoch oft nicht einmal durchgeführt werden, da entweder die Gefahr besteht, Apparate unbrauchbar zu machen, oder es schlicht nicht möglich ist, über Experimente die Realität nachzustellen.

Eine weitere bekannte Möglichkeit der Regleroptimierung besteht darin, auf historische Daten der verfahrenstechnischen Anlage zurückzugreifen. Diese werden im Normalbetrieb gewonnen und automatisiert auf Sprünge untersucht, die dann am geschlossenen Regelkreis (Regler, Aktor, Strecke, Sensor) errechnet werden. Bei dieser Methode werden mehr verschiedene PID-Bausteintypen unterstützt. Jedoch müssen hierzu erst die Daten aus dem Leitsystem gesammelt werden und in ein Prozessdatenarchiv übertragen werden. Die Ergebnisse werden dann durch Experten analysiert und ins System wieder eingebracht. Ein Problem hierbei ist, dass, wenn der Prozess in der Zeit keine Dynamik aufgewiesen hat (Sprünge oder Veränderungen im Sollwert), auch keine Analyse erfolgen kann. Zudem erlaubt diese Analysemethode keine Aussage über die übrigen Bestandteile des Leitsystems, was einen Rückschluss auf den Betriebszustand - bei dem die zugrunde liegenden Prozessdaten zur Optimierung gewonnen wurden - erschwert. Beim Rückspielen der Parameter in die Anlage kann außerdem ein menschlicher Fehler nicht ausgeschlossen werden.

Aufgrund von physikalischen Änderungen ist eine Regleroptimierung kein einmaliger Prozess, sondern muss regelmäßig durchgeführt werden um z.B. Ablagerungen, Alterungen etc. auszugleichen. Die bislang bekannten Methoden können dies nicht leisten.

In der EP 0 508 386 A2 ist ein Prozessleitsystem für eine Anlage zur Lufttrennung offenbart.

Die EP 2 042 958 A2 offenbart eine industrielles Automatisierungssystem mit einer Prozesstrendkomponente.

Der Erfindung liegt die Aufgabe zugrunde, ein System anzugeben, das kontextsensitiv, aber nicht invasiv bezüglich eines laufenden Betriebs des technischen Systems ist.

Diese Aufgabe wird gelöst durch ein System, umfassend einen Operator Station Client und einen mit dem Operator Station Client verbundenen Operator Station Server eines Leitsystems eines technischen Systems gemäß Anspruch 1. Zudem wird die Aufgabe gelöst durch ein Leitsystem für ein technisches System gemäß Anspruch 6 und eine Verwendung eines Leitsystems zum Betrieb eines technischen Systems gemäß Anspruch 7. Vorteilhafte Weiterbildungen ergeben sich aus den abhängigen Ansprüchen.

Das erfindungsgemäße System, ist dazu ausgebildet:
a) auf Anfrage eines Operators des Leitsystems hin kontinuierlich Trenddaten einer Regelung des Leitsystems zur Laufzeit des technischen Systems von einem auf dem Operator Station Server implementierten Trendanzeigedienst abzurufen, wobei der Trendanzeigendienst, über den eine Übertragung von Daten von dem Operator Station Server an den Operator Station Client erfolgt, innerhalb eines auf dem Operator Station Server integrierten Visualisierungsdienstes implementiert ist, wobei der Trendanzeigedienst dazu ausgebildet ist, die Trenddaten aus einem Prozessabbild des Operator Station Servers abzurufen und an den Operator Station Client zu übertragen, und auf einem Anzeigegerät des Operator Station Clients in einer ersten, auf dem Operator Station Client implementierten Anwendungsumgebung darzustellen;
b) die abgerufenen Trenddaten dahingehend zu überprüfen, ob wenigstens ein bestimmtes Auslösekriterium erfüllt ist;
c) für den Fall, dass das wenigstens eine bestimmte Auslösekriterium erfüllt ist, einen als relevant erachteten Zeitbereich in den Trenddaten als eine Teilmenge der Trenddaten in eine zweite, auf dem Anzeigegerät dargestellte, von der ersten Anwendungsumgebung unabhängige und auf dem Operator Station Client implementierte zweite Anwendungsumgebung zu übertragen;
d) von der zweiten Anwendungsumgebung ausgehend, die an die zweite Anwendungsumgebung übertragene Teilmenge der Trenddaten zur Laufzeit des technischen Systems an ein Regleroptimierungsmodul zu übertragen, wobei das Regleroptimierungsmodul auf einem von dem Operator Station Server und dem Operator Station Client unabhängigen, separaten Server und auf getrennter Computerinfrastruktur implementiert ist;
e) von dem Regleroptimierungsmodul anhand der empfangenen Teilmenge der Trenddaten überarbeitete Regelungsparameter zu empfangen, in einem Datenarchiv des Operator Station Servers zu hinterlegen und in der zweiten Anwendungsumgebung darzustellen;
f) die überarbeiteten Regelungsparameter von der zweiten Anwendungsumgebung an die erste Anwendungsumgebung zu übertragen; und
g) die überarbeiteten Regelungsparameter an die Regelung zu übertragen.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einem technischen System wird vorliegend eine Mehrzahl an Maschinen, Geräten, Applikationen oder dergleichen verstanden, die in einem funktionalen und oftmals auch räumlichen Zusammenhang zueinanderstehen. Mittels des technischen Systems können beispielsweise in (groß-)technischen Dimensionen Produkte, Komponenten und dergleichen erzeugt bzw. gefertigt werden. Bei dem technischen System kann es sich beispielsweise aber auch um ein Automobil, ein Schiff, ein Flugzeug oder dergleichen handeln.

Unter dem Begriff "Regelung" wird ein Vorgang verstanden, bei dem zu regelnde Prozessgrößen wie Temperatur, Druck, Durchfluss oder Füllstand mit einer anderen Größe, der sogenannten Stellgröße, fortlaufend verglichen wird und abhängig von einem Ergebnis dieses Vergleichs der Wert der Prozessgrößen beeinflusst wird. Die Regelung weist in der Regel verschiedene, vorgebbare Regelungsparameter wie eine Reglerverstärkung, eine Nachstellzeit oder eine Vorhaltzeit auf.

Unter dem Begriff "Trenddaten" werden Daten verstanden, die für die Regelung des technischen Systems charakteristisch sind. Dabei kann es sich beispielsweise um einen zeitlichen Verlauf der zu regelnden Prozessgröße und der korrespondierenden Stellgröße handeln.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Bei der Überprüfung der Trenddaten (Spiegelstrich b) wird ein bestimmter zeitlicher Ausschnitt der Trenddaten betrachtet und bewertet. Für den Fall, dass ein bestimmtes, vorgegebenes Auslösekriterium erfüllt ist, werden diejenigen Trenddaten an das Regleroptimierungsmodul weitergegeben, die zum aktuellen Zeitpunkt innerhalb des bestimmten zeitlichen Ausschnitts befindlich sind.

Das Regleroptimierungsmodul wendet an sich bekannte Methoden der Regelungsoptimierung an und generiert Regelungsparameter, die wiederum an die Regelung in dem Leitsystem übertragen werden. Dort kann dann die Regelung mit den überarbeiteten (oder neu erzeugten) Regelungsparametern erfolgen. Bevorzugt werden die Trenddaten der Regelung vor der Weitergabe an das Regleroptimierungsmodul einer Normierung bzw. Standardisierung unterzogen, wodurch beliebige Regleroptimierungsmodule verschiedener Hersteller verwendet werden können.

Das erfindungsgemäße System ermöglicht eine betriebsparallele und betriebszustandssensitive Optimierung der Regelung zur Laufzeit des technischen Systems. Die aktuellen Zustände des technischen Systems lassen sich direkt für die Optimierung berücksichtigen, was den Aufwand für die Optimierung verringern und deren Güte erhöhen kann. Ein Operator des Leitsystems kann die erzeugten Regelungsparameter manuell für die bestehende Regelung übernehmen. Alternativ ist es aber auch möglich, dass die erzeugten Regelungsparameter automatisch für die Regelung übernommen werden.

Die Regelung des Leitsystems und das Regleroptimierungsmodul sind erfindungsgemäß auf voneinander unabhängigen, getrennten Computerinfrastrukturen implementiert. Dies bedeutet, dass die Regelung des Leitsystems auf einem ersten Server (beispielsweise Operator Station Server) und das Regleroptimierungsmodul auf einem zweiten Server implementiert sind. Die Regleroptimierung kann dadurch vollkommen frei von negativen Seiteneffekten für den ersten Server auf dem zweiten Server ablaufen.

Ein Auslösekriterium kann eine Überschreitung und/oder Unterschreitung wenigstens eines Schwellwertes in den Trenddaten sein. Alternativ oder zusätzlich kann ein Auslösekriterium eine betragsmäßige Überschreitung einer Änderungsrate in den Trenddaten sein. Zudem ist als Auslösekriterium eine Benutzereingabe eines das Leitsystem bedienenden Operators möglich. Die Auslösekriterien können getrennt implementiert sein. Es ist aber auch denkbar, dass mehrere Auslösekriterien parallel implementiert sind, so dass die Trenddaten in verschiedenen Fallkonstellationen an das Regleroptimierungsmodul übermittelt werden.

Grundsätzlich kann das zuvor beschriebene Verhalten des Operator Station Clients mehrmals zu beliebigen Zeitpunkten angestoßen werden. Die erzeugten Regelungsparameter sind dabei voneinander unabhängig und können beliebig für die Regelung übernommen oder abgelehnt werden. Die erzeugten Regelungsparameter können in einem Datenarchiv des Leitsystems hinterlegt werden, um sie im weiteren Verlauf auswerten zu können, insbesondere im Rahmen eines Audit Trails.

Die Übertragung des als relevant (Auslösekriterium erfüllt) erachteten Zeitbereichs in den Trenddaten erfolgt zunächst von einer ersten Anwendungsumgebung auf dem Operator Station Client an eine zweite, hiervon unabhängige Anwendungsumgebung. Hier kann dann, unabhängig von einer Kommunikation mit dem Operator Station Server, die eigentliche Regleroptimierung zur Laufzeit des technischen Systems angestoßen werden, ohne dieses negativ zu beeinflussen. Vor der Übertragung der erzeugten Regelungsparameter von der zweiten Anwendungsumgebung an die erste Anwendungsumgebung (welche im direkten Austausch mit dem Operator Station Sever steht) kann entschieden werden, ob die erzeugten Regelungsparameter für die Regelung übernommen werden sollen.

Bevorzugt ist der Operator Station Client dazu ausgebildet, Trenddaten einer Mehrzahl von Regelungen abzurufen und wie zuvor erläutert weiterzuverarbeiten.

Die von dem Regelungsoptimierungsmodul empfangenen, überarbeiteten Regelungsparameter werden, unabhängig von einer ggf. erfolgten Übertragung an die erste Anwendungsumgebung, in einem Datenarchiv des Operator Station Servers hinterlegt. Hierzu ist der Operator Station Client entsprechend dazu ausgebildet.

Außerdem wird die Aufgabe gelöst durch ein Leitsystem für ein technisches System, insbesondere eine Fertigungs- oder Prozessanlage, das ein System, wie zuvor erläutert, mit einem Operator Station Client und einem Operator Station Server umfasst.

Weiterhin wird die Aufgabe durch eine Verwendung eines solchen Leitsystems zum Betrieb eines technischen Systems, insbesondere einer Fertigungs- oder Prozessanlage, gelöst.

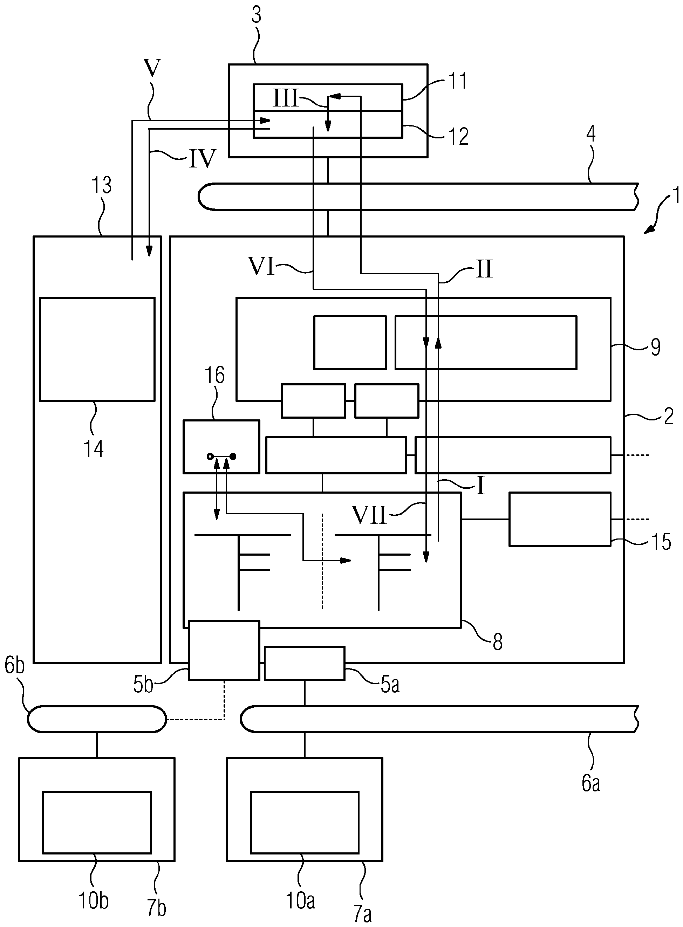

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 eines als verfahrenstechnischen Anlage ausgebildeten technischen Systems dargestellt. Das Leitsystem 1 umfasst einen Server eines Bediensystems bzw. einen Operator Station Server 2 und einen dazugehörigen Operator Station Client 3. Der Operator Station Server 2 und der Operator Station Client 3 sind über einen Terminalbus 4 miteinander und mit nicht dargestellten weiteren Komponenten des Leitsystems 1 wie einem Engineering System Server verbunden.

Ein Benutzer bzw. Operator hat mittels des Operator Station Clients 3 mittels des Terminalbus 4 im Kontext eines Bedienens und Beobachtens Zugriff auf den Operator Station Server 2. Der Terminalbus 4 kann, ohne sich darauf zu beschränken, beispielsweise als Industrial Ethernet ausgebildet sein.

Der Operator Station Server 2 weist Geräteschnittstellen 5a, 5b auf, die jeweils mit einem Anlagenbus 6a, 6b verbunden sind. Hierüber kann der Operator Station Server 2 mit Geräten 7a, 7b (hier eine Automatisierungsstation) kommunizieren. In jedem der beiden Geräte 7a, 7b ist jeweils eine Regelung 10a, 10b implementiert.

Bei dem angeschlossenen Geräten 7a, 7b kann es sich dabei alternativ auch um eine Applikation, insbesondere Webapplikation, handeln. Im Rahmen der Erfindung kann eine beliebige Zahl an Geräten 7a, 7b und/oder Applikationen an den Operator Station Server 2 angeschlossen sein. Die Anlagenbusse 6a, 6b können, ohne sich darauf zu beschränken, beispielsweise als Industrial Ethernet ausgebildet sein. Die Geräte 7a, 7b können wiederum mit einer beliebigen Anzahl an Subsystemen (nicht dargestellt) verbunden sein.

Der Operator Station Server 2 weist ein Prozessabbild (Process Image) 8 auf, in welchem Prozessdaten der verfahrenstechnischen Anlage wie die Daten der beiden Regelungen 10a, 10b abrufbar hinterlegt sind. In dem Operator Station Server 2 ist zudem ein Visualisierungsdienst 9 integriert, über den eine Übertragung von (Visualisierungs-)Daten an den Operator Station Client 3 erfolgen kann.

Innerhalb des Visualisierungsdienstes 9 ist ein Trendanzeigedienst 10 implementiert, der auf eine Anfrage eines Operators des Leitsystems 1 hin Trenddaten einer der beiden Regelungen 10a, 10b des Leitsystems 1 wie Stellgrößen und zu regelnde Prozessgrößen aus dem Prozessabbild 8 abruft (Schritt I) und an den Operator Station Client 3 überträgt (Schritt II). Innerhalb des Operator Station Clients 3 werden die Trenddaten in einer ersten Anwendungsumgebung 11 dargestellt.

Die abgerufenen Testdaten werden dahingehend überprüft, ob mindestens ein Auslösekriterium erfüllt ist, beispielsweise das Über- oder Unterschreiten eines Schwellwerts oder ein bestimmter Anstieg oder Abfall in den Trenddaten vorliegt. Auf Basis solcher Ereignisse kann dann automatisiert ein aktueller Zeitbereich der Trenddaten an eine zweite Anwendungsumgebung 12 weitergegeben werden (Schritt III). Das Auslösekriterium kann aber auch eine manuelle Beurteilung und entsprechende Eingabe des Operators sein, der aufgrund seiner Erfahrung Trenddaten richtig beurteilen kann.

Ausgehend von der zweiten Anwendungsumgebung 12 werden die Trenddaten anschließend an einen von dem Operator Station Server 2 unabhängigen, separaten Server 13 übertragen (Schritt IV). Dieser Server 13 kann innerhalb oder außerhalb (cloudbasiert) der verfahrenstechnischen Anlage befindlich sein. Unter einer Cloud wird dabei ein Rechnernetzwerk mit onlinebasierten Speicher- und Serverdiensten verstanden, welches üblicherweise als Cloud (engl. Wolke) oder Cloud-Plattform bezeichnet wird. Die in der Cloud gespeicherten Daten sind online zugänglich, sodass auch die verfahrenstechnische Anlage über das Internet Zugriff auf ein zentrales Datenarchiv in der Cloud hat.

Der Server 13 umfasst ein Regleroptimierungsmodul 14, welches anhand der empfangenen Trenddaten optimierte Regelungsparameter für eine der beiden Regelungen 10a, 10b erzeugt und zurück an die zweite Anwendungsumgebung 12 überträgt (Schritt V). Hier kann der Operator entscheiden, ob er die neuen Regelungsparameter an die betreffende Regelung überträgt (Schritte VI, VII) oder als nicht anwendbar verwirft. Es ist aber alternativ auch möglich, dass die überarbeiteten Regelungsparameter automatisch (ohne Operatoreingriff) für eine der beiden Regelungen 10a, 10b verwendet werden.

Die erzeugten Regelungsparameter werden, unabhängig von einer Entscheidung des Operators, in einem Datenarchiv 15 des Operator Station Servers 2 hinterlegt. Grundsätzlich kann ein Operator mehrere Regleroptimierungen zu unterschiedlichen Zeitunkten und bei unterschiedlichen Zuständen der Anlage initiieren, ohne dass die erzeugten Regelungsparameter gleich übernommen werden müssen. Vielmehr werden die Ergebnisse in dem Datenarchiv 15 festgehalten, um sie zu einem späteren Zeitpunkt von einem Projekteur der verfahrenstechnischen Anlage evaluieren lassen zu können.

Auf dem Operator Station Server 2 des Leitsystems 1 ist zudem ein Standardisierungsmodul 16 implementiert, welches die von den einzelnen (sich ggf. voneinander unterscheidenden) Regelungen 10a, 10b im Prozessabbild 8 empfangenen Trenddaten in eine einheitliche Datenstruktur wandelt, so dass ein beliebige (an sich geeignetes) Regleroptimierungsmodul 13 eines beliebigen Herstellers zur Erzeugung der Regelungsparameter verwendet werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

## Patentansprüche

1. System, umfassend einen Operator Station Client und einen Operator Station Server (2) eines Leitsystems (1) eines technischen Sytsems und ein Regleroptimierungsmodul (14), wobei der Operator Station Client (3) mit dem Operator Station Server (2) verbunden und dazu ausgebildet ist:
a) auf Anfrage eines Operators des Leitsystems (1) hin kontinuierlich Trenddaten einer Regelung (10a, 10b) des Leitsystems (1) zur Laufzeit des technischen Systems von einem auf dem Operator Station Server (2) implementierten Trendanzeigedienst (10) abzurufen, wobei der Trendanzeigendienst (10), über den eine Übertragung von Daten von dem Operator Station Server (2) an den Operator Station Client (3) erfolgt, innerhalb eines auf dem Operator Station Server (2) integrierten Visualisierungsdienstes (9) implementiert ist, wobei der Trendanzeigedienst (10) dazu ausgebildet ist, die Trenddaten aus einem Prozessabbild (8) des Operator Station Servers (2) abzurufen und an den Operator Station Client (3) zu übertragen, und auf einem Anzeigegerät des Operator Station Clients (3) in einer ersten, auf dem Operator Station Client (3) implementierten Anwendungsumgebung (11) darzustellen;
b) die abgerufenen Trenddaten dahingehend zu überprüfen, ob wenigstens ein bestimmtes Auslösekriterium erfüllt ist;
c) für den Fall, dass das wenigstens ein bestimmtes Auslösekriterium erfüllt ist, einen als relevant erachteten Zeitbereich in den Trenddaten als eine Teilmenge der Trenddaten in eine zweite, auf dem Anzeigegerät dargestellte, von der ersten Anwendungsumgebung (11) unabhängige und auf dem Operator Station Client (3) implementierte zweite Anwendungsumgebung (12) zu übertragen;
d) von der zweiten Anwendungsumgebung (12) ausgehend, die an die zweite Anwendungsumgebung (12) übertragene Teilmenge der Trenddaten zur Laufzeit des technischen Systems an das Regleroptimierungsmodul (14) zu übertragen, wobei das Regleroptimierungsmodul (14) auf einem von dem Operator Station Server (2) und dem Operator Station Client (3) unabhängigen, separaten Server (13) und auf getrennter Computerinfrastruktur implementiert ist;
e) von dem Regleroptimierungsmodul (14) anhand der empfangenen Teilmenge der Trenddaten überarbeitete Regelungsparameter zu empfangen, in einem Datenarchiv des Operator Station Servers (2) zu hinterlegen und in der zweiten Anwendungsumgebung (12) darzustellen;
f) die überarbeiteten Regelungsparameter von der zweiten Anwendungsumgebung (12) an die erste Anwendungsumgebung (11) zu übertragen; und
g) die überarbeiteten Regelungsparameter an die Regelung (10a, 10b) zu übertragen.

2. System nach Anspruch 1, der dazu ausgebildet ist, Trenddaten einer Mehrzahl von Regelungen (10a, 10b) abzurufen.

3. System nach einem der Ansprüche 1 oder 2, bei dem wenigstens ein Auslösekriterium eine Überschreitung und/oder Unterschreitung wenigstens eines Schwellwertes in den Trenddaten darstellt.

4. System nach einem der Ansprüche 1 bis 3, bei dem wenigstens ein Auslösekriterium eine betragsmäßige Überschreitung einer Änderungsrate in den Trenddaten darstellt.

5. System nach einem der Ansprüche 1 bis 4, bei dem wenigstens ein Auslösekriterium eine Benutzereingabe eines das Leitsystem (1) bedienenden Operators darstellt.

6. Leitsystem (1) für ein technisches System, insbesondere eine Fertigungs- oder Prozessanlage, das ein System gemäß einem der Ansprüche 1 bis 5 umfasst.

7. Verwendung eines Leitsystems (1) gemäß Anspruch 6 zum Betrieb eines technischen Systems, insbesondere einer Fertigungs- oder Prozessanlage.

## Claims

1. System, comprising an operator station client and an operator station server (2) of a control system (1) of a technical system and a controller optimisation module (14), wherein the operator station client (3) is connected to the operator station server (2) and is embodied:
a) on the request of an operator of the control system (1), to retrieve trend data of a closed-loop control (10a, 10b) of the control system (1) from a trend display service (10) implemented on the operator station server (2) continuously during runtime of the technical system, wherein the trend display server (10), via which a transfer of data from the operator station server (2) to the operator station client (3) takes place, is implemented within a visualisation service (9) integrated in the operator station server (2), wherein the trend display service (10) is embodied to retrieve the trend data from a process image (8) of the operator station server (2) and to transfer it to the operator station client (3), and display it on a display device of the operator station client (3) in a first application environment (11) that is implemented on the operator station client (3);
b) to check the retrieved trend data as to whether at least one specific trigger criterion has been met;
c) in the event of the at least one specific trigger criterion being met, to transfer a time range considered to be relevant in the trend data in the form of a subset of the trend data into a second second application environment (12) that is displayed on the display device, is independent of the first application environment (11) and is implemented on the operator station client (3);
d) starting from the second application environment (12), to transfer the subset of the trend data transferred to the second application environment (12) to the controller optimization module (14) during runtime of the technical system, wherein the controller optimisation module (14) is implemented on a separate server (13), which is independent from the operator station server (2) and the operator station client (3), and on a separate computer infrastructure;
e) to receive closed-loop control parameters revised by the controller optimization module (14) using the received subset of the trend data, to store them in a data archive of the operator station server (2) and to display them in the second application environment (12);
f) to transfer the revised closed-loop control parameters from the second application environment (12) to the first application environment (11); and
g) to transfer the revised closed-loop control parameters to the closed-loop control (10a, 10b).

2. System according to claim 1, which is embodied to retrieve trend data of a plurality of closed-loop controls (10a, 10b).

3. System according to one of claims 1 or 2, with which at least one trigger criterion constitutes an overshooting and/or undershooting of at least one threshold value in the trend data.

4. System according to one of claims 1 to 3, with which at least one trigger criterion constitutes a quantitative overshooting of a rate of change in the trend data.

5. System according to one of claims 1 to 4, with which at least one trigger criterion constitutes a user input by an operator operating the control system (1).

6. Control system (1) for a technical system, in particular a manufacturing or process plant, which comprises a system according to one of claims 1 to 5.

7. Use of a control system (1) according to claim 6 to operate a technical system, in particular a manufacturing or process plant.

## Revendications

1. Système, comprenant un operator station client et un operator station server (2) d'un système (1) de conduite d'un système technique et un module (14) d'optimisation de réglage, dans lequel l'operator station client (3) est relié à l'operator station server (2) et est constitué pour :
a) sur demande d'un opérateur du système (1) de conduite appeler d'un service (10) d'indication de tendance mis en oeuvre sur l'operator station server (2), en continu des données de tendance d'une régulation (10a, 10b) du système (1) de conduite pour la durée de marche du système technique, dans lequel le service (10) d'indication de tendance, par lequel s'effectue une transmission de données de l'operator station server (2) à l'operator station client (3), est mis en oeuvre au sein d'un service (9) de visualisation intégré sur l'operator station server (2), dans lequel le service (10) d'indication de tendance est constitué pour appeler les données de tendance à partir d'une reproduction (8) de processus de l'operator Station server (2) et pour les transmettre à l'operator station client (3) et les représenter sur un appareil d'affichage de l'operator station client (3) dans un premier environnement (11) d'application mis en oeuvre sur l'operator station client (3) ;
b) contrôler les données de tendance appelées sur le point de savoir si au moins un critère de déclenchement déterminé est satisfait ;
c) dans le cas où le au moins un critère de déclenchement déterminé est satisfait, transmettre un laps de temps, considéré comme pertinent, dans les données de tendance, sous la forme d'un ensemble partiel des données de tendance dans un deuxième environnement (12) d'application représenté sur l'appareil d'affichage, indépendant du premier environnement (11) d'application et mis en oeuvre sur l'operator station client (3) ;
d) à partir du deuxième environnement (12) d'application, transmettre l'ensemble partiel, transmis au deuxième environnement (12) d'application des données de tendance, pour la durée de marche du système technique au module (14) d'optimisation de réglage, dans lequel le module (14) d'optimisation de réglage est mis en oeuvre sur un serveur (13) distinct indépendant de l'operator station server (2) et de l'operator station client (3) et sur une infrastructure informatique distincte ;
e) recevoir du module (14) d'optimisation de réglage des paramètres de régulation révisés à l'aide de l'ensemble partiel reçu des données de tendance, les mettre dans une archive de données de l'operator station server (2) et les représenter dans le deuxième environnement (12) d'application ;
f) transmettre les paramètres de régulation révisés du deuxième environnement (12) d'application au premier environnement (11) d'application ; et
g) transmettre les paramètres de régulation révisés à la régulation (10a, 10b).

2. Système suivant la revendication 1, qui est constitué pour appeler des données de tendance d'une pluralité de régulations (10a, 10b).

3. Système suivant l'une des revendications 1 ou 2, dans lequel au moins un critère de déclenchement représente un franchissement par le haut et/ou un franchissement par le bas d'au moins une valeur de seuil dans les données de tendance.

4. Système suivant l'une des revendications 1 à 3, dans lequel au moins un critère de déclenchement représente un dépassement en valeur absolue d'un taux de modification dans les données de tendance.

5. Système suivant l'une des revendications 1 à 4, dans lequel au moins un critère de déclenchement représente une entrée d'utilisateur d'un opérator faisant fonctionner le système (1) de conduite.

6. Système (1) de conduite d'un système technique, en particulier d'une installation de fabrication ou de processus, qui comprend un système suivant l'une des revendications 1 à 5.

7. Utilisation d'un système (1) de conduite suivant la revendication 6, pour faire fonctionner un système technique, en particulier une installation de fabrication ou de processus.
